# EUROPÄISCHE PATENTSCHRIFT

(11) **EP 2 736 728 B1**
(45) Veröffentlichungstag und Bekanntmachung des Hinweises auf die Patenterteilung: **16.12.2015**
(21) Anmeldenummer: 12748159.6
(22) Anmeldetag: 23.07.2012
(51) Int. Cl.: B42D 25/00

(54) **SICHERHEITSELEMENT MIT FENSTER IM SUBSTRAT**
SECURITY ELEMENT WITH WINDOW IN THE SUBSTRATE
ÉLÉMENT DE SÉCURITÉ À FENÊTRE DANS LE SUBSTRAT

(30) Priorität: 25.07.2011 DE 102011108477
(43) Veröffentlichungstag der Anmeldung: 04.06.2014
(73) Patentinhaber: Giesecke & Devrient GmbH, 81677 München (DE)
(72) Erfinder: BORNSCHLEGL, Alexander, 81735 München (DE); ENGELMANN, Patrick, 83727 Neuhaus (DE); LIEBLER, Ralf, 83727 Schliersee (DE); MENGEL, Christoph, 83607 Holzkirchen (DE); OTTO, Daniela, 81669 München (DE); RENNER, Patrick, 83677 Reichersbeuern (DE); SEIDLER, Rudolf, 83703 Gmund (DE)
(86) Internationale Anmeldenummer: PCT/EP2012/003101
(87) Internationale Veröffentlichungsnummer: WO 2013/013807

(56) Entgegenhaltungen:
- EP-A1- 1 935 663
- WO-A2-03/089250
- CH-A2- 701 875

## Beschreibung

Die Erfindung betrifft ein Sicherheitselement zur Absicherung von Wertgegenständen mit einem Substrat mit einem Fenster, das zumindest eine durch das Substrat durchgehende Hohlkammer enthält. Die Erfindung betrifft auch ein Verfahren zur Herstellung eines derartigen Sicherheitselements, eine Sicherheitsanordnung mit einem solchen Sicherheitselement und einen entsprechenden Datenträger.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Dabei gewinnen zunehmend Durchsichtssicherheitsmerkmale, wie etwa Durchsichtsfenster in Banknoten, an Attraktivität.

Dokument CH 701875 A2 offenbart ein Sicherheitselement nach dem Oberbegriff des Anspruchs 1.

Ausgehend davon liegt der Erfindung die Aufgabe zugrunde, ein gattungsgemäßes Sicherheitselement mit hoher Fälschungssicherheit und idealerweise auch einem attraktiven visuellen Erscheindungbild zu schaffen.

Diese Aufgabe wird durch die Merkmale der unabhängigen Ansprüche gelöst. Weiterbildungen der Erfindung sind Gegenstand der abhängigen Ansprüche.

Gemäß der Erfindung ist bei einem gattungsgemäßen Sicherheitselement die zumindest eine Hohlkammer mit einem Füllmaterial mit einem Sicherheitsmerkmal gefüllt, ist die zumindest eine Hohlkammer auf beiden Seiten des Substrats jeweils mit einer zumindest teilweise lichtdurchlässigen Abdeckfolie abgedeckt, und weist die zumindest eine Hohlkammer eine durch die Substratdicke am Rand der Hohlkammer definierte Hohlkammertiefe auf, die zwischen 0,5 µm und 140 µm liegt. Bevorzugt liegt die Hohlkammertiefe dabei zwischen 20 garn und 100 µm, vorzugsweise entweder zwischen 80 µm und 90 µm, insbesondere zwischen 85 µm und 90 µm, oder zwischen 20 µm und 40 µm.

Das Papiersubstrat des Sicherheitselements weist mit Ausnahme lokaler Verdünnungs- oder Verdickungsstellen eine im Wesentlichen konstante Substratdicke auf, die im Rahmen dieser Beschreibung als Substratstärke S bezeichnet wird. In Teilbereichen kann die lokale Substratdicke allerdings von dieser globalen Substratstärke abweichen, beispielsweise im Bereich von Wasserzeichen, E-Typen, einem Büttenrand oder auch im Bereich einer Substratverstärkung, beispielsweise durch ein aufgebrachtes Folienelement. Die lokale Substratdicke am Rand der Hohlkammer legt so eine Hohlkammertiefe H fest, die auch größer oder kleiner als die Substratstärke S sein kann.

Da die gegenüberliegenden Abdeckfolien nach der Füllung der Hohlkammer und der Abdeckung der gefüllten Hohlkammer in der Regel nicht völlig parallel auf Höhe des Hohlkammerrandes verlaufen, wird durch den Abstand der Abdeckfolien im Inneren der Hohlkammer eine dritte Größe definiert, die im Rahmen dieser Beschreibung als Auffüllungshöhe A bezeichnet wird. Ob die Auffüllungshöhe A größer, kleiner oder gleich der Hohlkammertiefe H ist, hängt unter anderem von der Art und den Eigenschaften des Füllmaterials, aber auch von dem verwendeten Applikationsverfahren für das Füllmaterial ab. Für den Fachmann ist klar, dass im Fall nicht paralleler Abdeckfolien die lokale Füllhöhe in der Hohlkammer vom Rand her ab- oder zunimmt. Die Auffüllungshöhe A wird daher im Inneren der Hohlkammer gemessen, wo die lokale Füllhöhe ihren minimalen (im Fall, dass A < H ist) oder maximalen (im Fall, dass A > H ist) Wert aufweist.

Das Füllmaterial weist als Sicherheitsmerkmal mit Vorteil mikroverkapselte Systeme oder nicht-sphärische Effektpigmente auf. Konkrete Beispiele für mikroverkapselte Systeme bzw. nicht-sphärische Effektpigmente und deren Vorteile sind weiter unten im Detail geschildert. In einer besonders bevorzugten Variante weist das Sicherheitsmerkmal ein mikroverkapseltes System auf, das eine Vielzahl von Mikrokapseln umfasst, die jeweils eine Kapselhülle und einen durch externe Magnetfelder beeinflussbaren, insbesondere durch externe Magnetfelder ausrichtbaren Kapselinhalt aufweisen. Auch die Eigenschaften und Vorteile solcher magnetisch beeinflussbarer Systeme sind weiter unten genauer geschildert.

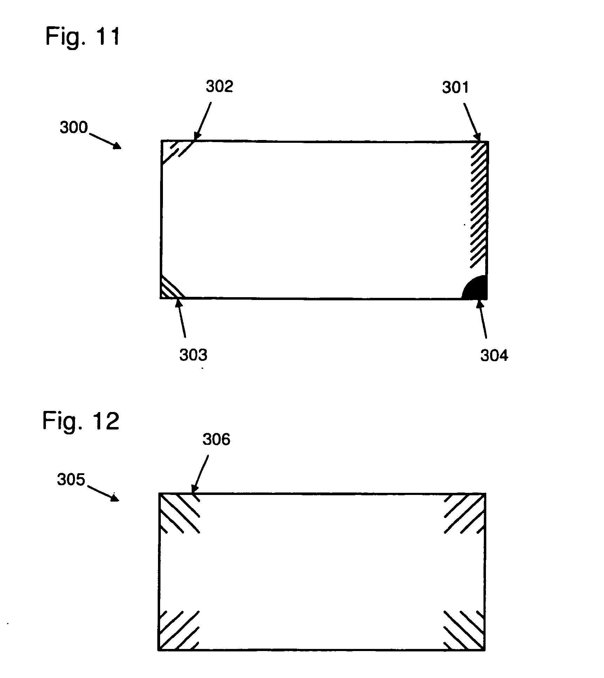

Gemäß einer bevorzugten Ausführungsform kann das Füllmaterial als einbettende Matrix beispielsweise einen Klebstoff aufweisen. Dies ist insbesondere vorteilhaft bei Datenträgersubstraten, die auf einem mehrschichtigen Folie/Papier/Folie-Aufbau (mit Hohlkammern in der Papierlage) oder einem Folie/Folie/Folie-Aufbau (mit Hohlkammern in der zentralen Folienlage) basieren. Datenträgersubstrate mit einer Papier-Mittellage, deren Vorderseite und Rückseite jeweils von einer Folie abgedeckt ist, sind aus der EP 1545 902 B1 bekannt. Es hat sich gezeigt, dass die Beständigkeit eines solchen verbundförmigen Datenträgersubstrats gegenüber einem Aufspalten in einzelne Fragmente in hohem Ausmaß verbessert werden kann, indem insbesondere an den Kanten und/oder Ecken des Datenträgers Hohlkammern bzw. Hohlräume vorgesehen werden, deren Füllmaterial einen Klebstoff aufweist. Das Datenträgersubstrat (das insbesondere einen Folie/Papier/Folie-Aufbau aufweist, so dass die Hohlkammer(n) in der Papierlage gebildet ist bzw. sind) kann mit Vorteil an jeder Ecke zumindest eine Hohlkammer aufweisen. Alternativ oder zusätzlich können die Hohlkammern an den Kanten des Datenträgersubstrats vorgesehen werden (insbesondere an allen Kanten des Datenträgersubstrats). Die zur Verstärkung des Datenträgersubstrats eingesetzten, Klebstoff-aufweisenden Hohlkammern können jegliche Form aufweisen, z.B. die Form eines Kreises, einer Ellipse, eines Streifens oder dergleichen. Insbesondere können die Hohlkammern streifenförmig ausgebildet sein (d.h. es wird eine Vielzahl von jeweils steifenförmig ausgebildeten Hohlkammern bereitgestellt, wobei die Streifen parallel oder im Wesentlichen parallel angeordnet sind). Die Hohlkammern werden dabei durch Stege des Substratmaterials (alternativ durch Stege aus einem Abstandhalter, siehe unten) voneinander getrennt. Jeder Streifen weist bevorzugt eine Breite in einem Bereich von 0,5 mm bis 3 mm auf. Es wird bevorzugt, dass die Stege bzw. Abstandhalter jeweils eine Breite in einem Bereich von 0,5 mm bis 3 mm aufweisen. Im Falle, dass die zur Verstärkung des Datenträgersubstrats eingesetzten, Klebstoff-aufweisenden, streifenförmigen Hohlkammern an den Ecken des Datenträgers vorgesehen werden, ist es insbesondere vorteilhaft, dass die Streifen im Wesentlichen parallel zur Winkelhalbierenden der jeweiligen Ecke angeordnet sind (siehe Figur 12). Im Falle einer rechtwinkligen Ecke bildet die Winkelhalbierende mit Bezug auf einen der Ränder des Datenträgers einen Winkel von 45°. Es ist nicht zwingend erforderlich, dass die parallel angeordneten Streifen in einem exakten Winkel von 45° zum Rand des Datenträgers angeordnet sind, sondern der Winkel kann mit Vorteil in einem Bereich von 35° bis 55° liegen. In einer Variante sind die Streifen "im Wesentlichen" parallel angeordnet, d.h. es handelt sich um divergierende Streifen. Im Falle, dass die zur Verstärkung des Datenträgersubstrats eingesetzten, Klebstoff-aufweisenden, streifenförmigen Hohlkammern an den Kanten des Datenträgers vorgesehen werden, ist es insbesondere vorteilhaft, dass die Streifen parallel angeordnet sind und mit Bezug auf den Rand des Datenträgers einen Winkel von im Wesentlichen 45° bilden (der Winkel liegt mit Vorteil in einem Bereich von 35° bis 55°) (siehe Fig. 11). Im Falle, dass der Datenträger auf einem Folie/Papier/Folie-Aufbau basiert, können die zur Verstärkung des Datenträgersubstrats eingesetzten, Klebstoff-aufweisenden Hohlkammern insbesondere in der Farbe des Papiers eingefärbt sein. Auf diese Weise sind die Hohlkammern im fertig hergestellten Datenträger, z.B. eine Banknote, für den Betrachter visuell nicht erkennbar.

Gemäß einer weiteren bevorzugten Ausführungsform enthält das Füllmaterial eine klebstofffreie Matrix für das Sicherheitsmerkmal, insbesondere ein thermoplastisches Harz, ein UV-vernetzendes Harz, ein Elektronenstrahl-vernetzendes Harz oder ein chemisch filmbildendes Harz.

Mit Vorteil liegt das Füllmaterial ausschließlich innerhalb der zumindest einen Hohlkammer vor und erstreckt sich nicht auf die außerhalb der Hohlkammer liegenden Oberflächenbereiche des Substrats.

Gemäß einer Weiterbildung der Erfindung weist das Sicherheitselement innerhalb des Fensters Abstandhalter auf, die eine konstante Auffüllungshöhe sicherstellen. Bei einer vorteilhaften Erfindungsvariante sind die Abstandhalter dabei in das Füllmaterial eingebettet, insbesondere in Form von monodispersen Vollkugeln oder Hohlkugeln. Bei einer anderen, ebenfalls vorteilhaften Erfindungsvariante sind die Abstandhalter durch eine Vielzahl von Stegen des Substratmaterials gebildet, die das Fenster durchziehen. Die Stege können gerade oder gekrümmt sein und sowohl eine konstante als auch eine variierende Breite aufweisen. In diesem Fall besteht das Fenster aus mehreren Hohlkammern, die durch die Stege getrennt sind. Als weiteren Vorteil erhöhen die Stege, insbesondere bei solchen Gestaltungen, bei denen das Füllmaterial eine geringe Viskosität aufweist oder nach der Füllung nicht oder nur geringfügig gehärtet wurde, auch die Haltbarkeit des Sicherheitselements.

In einer vorteilhaften Gestaltung unterscheidet sich die Auffüllungshöhe um weniger als 10 %, vorzugsweise um weniger als 5 % von der Hohlkammertiefe. In anderen Gestaltungen kann ein deutlicher Unterschied zwischen Auffüllungshöhe und Hohlkammertiefe gewünscht und durch besondere Maßnahmen eingestellt sein, wie weiter unten genauer erläutert.

Die Füllung füllt die Hohlkammern des Substrats vorzugsweise vollständig aus. Im Rahmen der Erfindung ist aber auch eine teilweise Auffüllung der Hohlkammer möglich oder eine Auffüllung mit unterschiedlichen Füllmaterialien. Insbesondere bei Auffüllung im Siebdruckverfahren können so komplexe Muster oder Grafiken in einer Hohlkammer erzeugt werden.

Das Fenster ist vorzugsweise mit einem Umriss in Form von Zeichen, Mustern oder einer Codierung ausgebildet. Es kann aus einer einzigen Hohlkammer mit der gewünschten Umrissform oder auch aus mehreren Hohlkammern bestehen, die zusammen die gewünschte Umrissform ergeben. Beispielsweise kann das Fenster bei einer Banknote die Form der Denomination "10" haben und aus zwei Hohlkammern, eine in Form der Ziffer "1", eine in Form der Ziffer "0" bestehen. Die Ziffern können auch in mehrere Segmente unterteilt sein, so dass das Fenster aus einer größeren Anzahl an Hohlkammern besteht.

In einer besonders bevorzugten Ausgestaltung umfasst das Fenster des Sicherheitselements ein Linienraster aus einer Vielzahl gerader oder gekrümmter Schnittlinien, bei dem die Schnittlinien die Hohlkammern bilden, die mit dem Füllmaterial mit dem Sicherheitsmerkmal gefüllt sind. Die ungeschnittenen Bereiche zwischen den Schnittlinien bilden dann Stege, die das Fenster durchziehen und eine konstante Auffüllungshöhe gewährleisten.

Die Erfindung umfasst auch ein Verfahren zum Herstellen eines Sicherheitselements zur Absicherung von Wertgegenständen, bei dem
- in einem Substrat ein Fenster erzeugt wird, das zumindest eine durch das Substrat durchgehende Hohlkammer enthält,
- die zumindest eine Hohlkammer mit einem Füllmaterial mit einem Sicherheitsmerkmal gefüllt wird,
- die zumindest eine Hohlkammer auf beiden Seiten des Substrats jeweils mit einer zumindest teilweise lichtdurchlässigen Abdeckfolie abgedeckt wird, wobei
- die zumindest eine Hohlkammer eine durch die Substratdicke am Rand der Hohlkammer definierte Hohlkammertiefe aufweist, die zwischen 0,5 µm und 140 µm liegt.

Das Fenster wird vorzugsweise durch Stanzen oder Laserschneiden erzeugt. Mit Vorteil wird das Substrat mit dem Fenster zunächst einseitig mit einer Abdeckfolie versehen, dann wird die Füllung in die zumindest eine Hohlkammer eingebracht und schließlich wird die zweite Abdeckfolie auf das Substrat und die gefüllten Hohlkammern aufgebracht. Die Füllung der Hohlkammern erfolgt beispielsweise durch Sieb- oder Flexodruck, wobei gegebenenfalls mehrfach gedruckt werden muss, um eine ausreichende Materialmenge in die Hohlkammern einzubringen. In einer bevorzugten Verfahrensvariante wird das Füllmaterial mit Hilfe von Dosierdüsen in die Hohlkammern gespritzt. Dabei können mit Vorteil heizbare Dosiersysteme verwendet werden, um auch Füllmaterialien gut dosieren zu können, die bei Zimmertemperatur hochviskos sind.

Bei einer alternativen Verfahrensführung kann das Füllmaterial auch auf eine oder auf beide Abdeckfolien in einem Druck- oder Beschichtungsverfahren aufgebracht werden. Falls notwendig, wird das aufgebrachte Material getrocknet, und wird dann registergenau über der zumindest einen Hohlkammer platziert.

Die Erfindung enthält ferner eine Sicherheitsanordnung zur Absicherung von Sicherheitspapieren, Wertdokumenten, Datenträgern und dergleichen, mit einem Sicherheitselement der oben beschriebenen Art und einem Verifikationselement mit einem Magnetbereich. Dabei wird Sicherheitsmerkmal gewählt, das durch Magnetfelder beeinflussbar, insbesondere ausrichtbar ist. In dem Magnetbereich des Verifikationselements liegt vorteilhaft magnetisches Material in Form von Mustern, Linien, Zeichen oder einer Codierung vor. Vorzugsweise ist der Magnetbereich im Wesentlichen senkrecht zur Ebene des Verifikationselements magnetisiert.

Die Erfindung umfasst weiter einen Datenträger, insbesondere ein Wertdokument, wie eine Banknote, einen Pass, eine Urkunde, eine Ausweiskarte, Kreditkarte oder dergleichen, in den ein Sicherheitselement oder eine Sicherheitsanordnung der beschriebenen Art integriert ist, oder der mit einem solchen Sicherheitselement oder einer solchen Sicherheitsanordnung ausgestattet ist. Im ersten Fall bildet das Sicherheitselement einen untrennbaren Teilbereich des Datenträgers und ist daher in diesen integriert, während das Sicherheitselement im zweiten Fall zunächst separat hergestellt oder erst danach auf den Datenträger aufgebracht oder in den Datenträger eingebracht wird.

In allen Gestaltungen können die beschriebenen Effekte mit weiteren Sicherheitsmerkmalen kombiniert werden, die auf die Abdeckfolien aufgebracht sind, beispielsweise mit Hologrammen, Merkmalen auf Basis von Blazegittem, Moiré-Magnifiern oder Sicherheitsdrucken.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Hybrid-Banknote mit einem integrierten erfindungsgemäßen Sicherheitselement,
- Fig. 2: einen Querschnitt des Sicherheitselements der Fig. 1 entlang der Linie II-II,
- Fig. 3: eine schematische Darstellung eines erfindungsgemäßen Sicherheitselements zur Illustration der Definition und des Zusammenhangs der Größen Substratstärke, Hohlkammertiefe und Auffüllungshöhe,
- Fig. 4: in (a) bis (k) verschiedene bevorzugte Ausgestaltungen mit unterschiedlichen relativen Größen von Substratstärke, Hohlkammertiefe und Auffüllungshöhe,
- Fig. 5: eine Aufsicht auf eine Identifikationskarte mit einem integrierten erfindungsgemäßen Sicherheitselement,
- Fig. 6: einen Querschnitt der Identifikationskarte der Fig. 5 entlang der Linie VI-VI, in (a) ohne äußeres Magnetfeld und in (b) mit äußerem Magnetfeld,
- Fig. 7: in (a) eine Kartenaufnahme für die Identifikationskarte der Fig. 5 und in (b) die Kartenaufnahme zusammen mit der eingelegten Identifikationskarte,
- Fig. 8: einen Querschnitt eines Sicherheitselements nach einem weiteren Ausführungsbeispiel der Erfindung,
- Fig. 9: in (a) einen Querschnitt und in (b) eine Aufsicht auf ein Sicherheitselement nach einem weiteren Ausführungsbeispiel der Erfindung, und
- Fig. 10: eine Aufsicht auf ein Sicherheitselement nach noch einem weiteren Ausführungsbeispiel der Erfindung;
- Fig. 11: eine Aufsicht auf einen Datenträger mit den erfindungsgemäßen Sicherheitselementen; und
- Fig. 12: eine Aufsicht auf einen weiteren Datenträger mit den erfindungsgemäßen Sicherheitselementen.

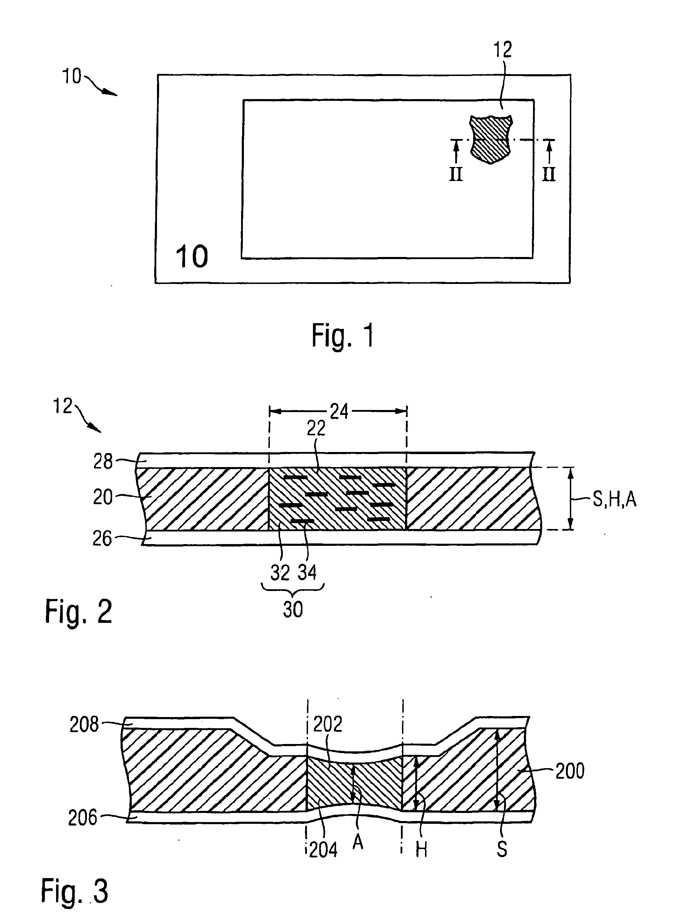

Die Erfindung wird nun am Beispiel von Sicherheitselementen für Banknoten und andere Datenträger erläutert. Fig. 1 zeigt dazu eine schematische Darstellung einer Hybrid-Banknote 10 mit einem Schichtaufbau Folie/Papier/Folie, in die ein erfindungsgemäßes Sicherheitselement 12 integriert ist. Das Sicherheitselement 12 ist in Fig. 2 im Querschnitt entlang der Linie II-II genauer dargestellt.

Mit Bezug auf den Querschnitt der Fig. 2 enthält das Sicherheitselement 12 als Substrat eine Papierlage 20 mit einer Substratstärke S, die zwischen 70 µm und 100 µm, im Ausführungsbeispiel bei S = 85 µm liegt. Die Papierlage 20 enthält in der gezeigten Gestaltung nur eine einzige, durch die Papierlage durchgehende Hohlkammer 22, die ein wappenförmiges Durchsichtsfenster 24 in der Papierlage und dem Sicherheitselement 12 bildet.

Durch die Substratdicke am Rand der Hohlkammer ist eine Hohlkammertiefe H definiert, die im Allgemeinen von der globalen Substratstärke S außerhalb des Hohlkammerbereichs abweichen kann (Fig. 3). Im Ausführungsbeispiel der Fig. 2 entspricht die Substratdicke am Rand der Hohlkammer der Substratstärke S, so dass die Hohlkammertiefe H ebenfalls 85 µm beträgt.

Die Papierlage 20 ist zumindest im Bereich des Hohlkammer 22 auf ihren beiden gegenüberliegenden Seiten jeweils mit einer transparenten Laminatfolie 26, 28 abgedeckt. Der Abstand der beiden gegenüberliegenden Laminatfolien 26, 28 definiert eine Auffüllungshöhe A, die im Allgemeinen von der Substratstärke S und der Hohlkammertiefe H abweichen kann (Fig. 3). Im Ausführungsbeispiel der Fig. 2 entspricht allerdings die Auffüllungshöhe A der Substratstärke S und der Hohlkammertiefe, H, so dass die Auffüllungshöhe A ebenfalls 85 µm beträgt.

Die Hohlkammer 22 ist mit einem Füllmaterial 30 gefüllt, das in einem Bindemittel 32 plättchenförmige Effektpigmente 34 aus vernetzten Flüssigkristallen enthält. Die Effektpigmente 34 sind teildurchlässig und zeigen einen charakteristischen Farbkippeffekt. Bei den mit herkömmlichen Druckverfahren erzielbaren geringeren Schichtdicken zeigen diese Effektpigmente, verglichen mit reflektiven Pigmenten, einen schwächer ausgeprägten Farbeffekt. Erfindungsgemäß liegen die Effektpigmente 34 in der Hohlkammer 22 allerdings aufgrund der großen Hohlkammertiefe und Auffüllungshöhe von 85 µm in einer wesentlich höheren Schichtdicke als in herkömmlichen Druckschichten vor. Zudem kann das Füllmaterial 30 ein deutlich höheres Pigment-zu-Bindemittel-Verhältnis als herkömmliche Druckfarben aufweisen, da einerseits die Laminatfolien 26, 28 die innenliegende Füllung ausreichend vor Abrieb schützt und andererseits geringere Anforderungen an die Verdruckbarkeit, insbesondere das Fließverhalten des Füllmaterials und die Umhüllung der Effektpigmente 34 gestellt werden als bei herkömmlichen Druckverfahren zur Bedruckung von Substratoberflächen.

Ein weiterer Vorteil besteht darin, dass die glatten, nicht saugfähigen Laminatfolien 26, 28, verglichen mit rauem, ungestrichenen Papier als Bedruckstoff, eine besonders gleichmäßige und parallele Ausrichtung der plättchenförmigen Effektpigmente 34 ermöglichen. Insgesamt zeigt die Füllung 30 mit den Effektpigmenten 34 somit ein besonders brillantes Erscheinungsbild mit einem leuchtkräftigen Farbkippeffekt.

Zur Herstellung des Sicherheitselements 12 wurde in der Papierlage 20 durch Stanzen oder Laserscheiden zunächst eine Hohlkammer 22 erzeugt. Die Hohlkammer 22 kann im Allgemeinen beliebige Form haben, insbesondere kann ein Fenster 24 auch mehrere, beispielsweise durch Stege voneinander getrennte Hohlkammern aufweisen.

Im nächsten Schritt wurde die Papierlage 20 dann einseitig mit einer Abdeckfolie 26 laminiert. Um ein Durchschlagen des verwendeten Klebstoffs auf die Walzen zu vermeiden, kann die Papierlage 20 im Kissprint-Verfahren mit lösemittelfreiem Klebstoff bei einem Auftrag von weniger als 9 g/m² beschichtet werden. Wegen der relativ großen Dicke der Papierlage 20 wird dadurch ein Durchschlagen des Klebstoffs wirkungsvoll verhindert. Die Füllung der Hohlkammer(n) 22 kann mit verschiedenen Verfahren erfolgen. Bewährt haben sich insbesondere Siebdruck- und Flexodruckverfahren.

Dabei kann es erforderlich sein, mehrfach zu drucken, um die Hohlkammern 22 mit einer ausreichenden Menge an Füllmaterial aufzufüllen.

Als besonders vorteilhaft haben sich Füllverfahren herausgestellt, bei denen die erforderliche Substanzmenge mit Hilfe von Dosierdüsen in die Hohlkammern 22 gespritzt werden. Bei geeigneten Systemen werden Tropfen mit Frequenzen von bis zu 1000 Hz erzeugt und in ausreichenden Volumina in der bei Rollenprozessen zur Verfügung stehenden kurzen Zeit von nur einigen Millisekunden dosiert. Da derartige Dosiersysteme auch geheizt werden können, können auch bei Zimmertemperatur hochviskose Füllmaterialien gut dosiert werden. Eine auf die Hohlkammern gepasserte Ansteuerung der Düsen ist mit Hilfe von Registermarken, beispielsweise auf einem Wertpapierbogen, leicht möglich.

Bei der Verwendung von lösemittelhaltigen oder wässrigen Füllmaterialien 30 wird die Füllung vor dem Aufkaschieren der zweiten Abdeckfolie 28 zunächst getrocknet. Der Kaschierklebstoff muss im Bereich der Hohlkammer 22 in der Regel nicht ausgespart werden, in manchen Gestaltungen kann dies jedoch vorteilhaft oder sogar notwendig sein. Weiter kann es vorteilhaft sein, wenn das eindosierte Füllmaterial beim Aufkaschieren der zweiten Abdeckfolie 28 noch verformbar ist, so dass auch tropfen- oder raupenförmige Materialaufträge im Hohlkammerbereich gleichmäßig verteilt werden. Eine gleichmäßige Verteilung des Füllmaterials kann weiter durch eine geeignete Wahl des Kaschierdrucks, der Temperatur, der Shorehärte des Presseurgummis, der Maschinengeschwindigkeit, der Oberflächeneigenschaften der Folie und des gegebenenfalls vorhandenen Kaschierklebstoffs im Hohlkammerbereich begünstigt werden.
Enthält das Füllmaterial ein strahlungshärtbares System, so wird nach der Kaschierung belichtet. Bei kationisch-strahlenhärtenden Systemen und bei radikalischen Systemen ist ein Härten auch vor dem Kaschieren möglich. Auf diese Weise können mit ausgehärteten Mikrotropfen oder Raupen taktile Elemente erzeugt werden.

Bei einer weitere Möglichkeit, die Hohlkammer 22 mit dem Füllmaterial 30 zu füllen, wird das Füllmaterial auf eine oder auf beide Abdeckfolien 26, 28 in einem Druck- oder Beschichtungsverfahren aufgebracht, falls notwendig getrocknet, und dann registergenau über der Hohlkammer 22 platziert.

Das Füllmaterial 30 besteht typischerweise aus einer einbettenden Matrix und dem gewünschten Sicherheitsmerkmal. Als Matrix kommen beispielsweise Klebstoffe in Frage, wobei wässrige, lösemittelbasierende oder lösemittelfreie 1-Komponenten- oder 2-Komponenten-Klebstoffe (chemisch oder UV-vernetzend) oder Schmelzklebstoffe eingesetzt werden können. Gegenwärtig ist allerdings bevorzugt, wenn die Matrix klebstofffrei ist. Die Matrix kann insbesondere ein thermoplastisches Harz, ein UV-vernetzendes Harz oder ein Elektronenstrahl-vernetzendes Harz sein. Vorteilhaft weisen die entstehenden Füllungen eine ausreichende Elastizität auf, so dass sie auch bei mechanischer Biege- und Knitterbeanspruchung nicht brechen.

Besonders gute Ergebnisse können erzielt werden, wenn die Füllung auf die Hohlkammer(n) 22 beschränkt ist, so dass das Füllmaterial ausschließlich innerhalb der Hohlkammer(n) 22 vorliegt.

Die Erfindung bietet vor allem für solche Sicherheitsmerkmale besondere Vorteile, die eine hohe Schichtdicke benötigen, die mit herkömmlichen Druckverfahren nicht erzeugt werden kann, oder die von einer solchen hohen Schichtdicke profitierten. Zu diesen Sicherheitsmerkmalen zählen beispielsweise Melierfasern und die bereits erwähnten mikroverkapselten Systeme und nicht-sphärischen Effektpigmente.

Mikroverkapselte funktionale Systeme bestehen typischerweise aus einer Kapselhülle und einem Kapselinhalt, der eine gewünschte Funktion bereitstellt. Sie ermöglichen besondere Effekte, sind aber aufgrund ihrer runden Form und der vergleichsweise dünnen Kapselhülle stärker gefährdet, ihre Funktion durch mechanische oder chemische Beanspruchung zu verlieren als herkömmliche Effektpigmente. Für Sicherheitsmerkmal auf Basis derartiger mikroverkapselter funktionaler Systeme bietet die vorliegende Erfindung mehrere Vorteile: Die beidseitige Kaschierung der Hohlkammern mit Abdeckfolien bietet eine erhöhte Schutzwirkung, die Hohlkammern erlauben eine hochgenaue Lokalisierung der Mikrokapseln an gewünschten Positionen und in einer gewünschten Umrissform, und die hohe Schichtdicke innerhalb der Hohlkammern ermöglicht schließlich Effektstärken, die mit herkömmlichen Druckschichten nicht erzielt werden können.

Nachfolgend sind einige Beispiele für mikroverkapselte Systeme angegeben, die mit Vorteil als Sicherheitsmerkmale in die Hohlkammern 22 eingebracht sind:
Thermochrome Leucofarbstoffe: Sie zeigen bei steigender Temperatur ab einem gewissen, einstellbaren Grenzwert einen Wechsel von farbig zu weiß oder von transparent zu streuend. Üblicherweise besitzen diese Pigmente Durchmesser von 1 µm bis 20 µm und eignen sich dadurch in besonderer Weise für die Dosierung mittels einer Düse. Da ihre Farbstärke in der Regel geringer als die von konventionellen Farben ist, kann durch die erhöhte Schichtdicke eine gute Farbwirkung sichergestellt werden.

Thermochrome Flüssigkristallpigmente: Sie zeigen ein regenbogenartiges Farbspiel des reflektierten Lichtes bei Veränderung der Temperatur. Derartige Kapseln und ihre Verwendung im Sicherheitsdruck sind beispielsweise in der Druckschrift WO 2007/115663 A2 beschrieben, deren Offenbarung insoweit in die vorliegende Anmeldung aufgenommen wird. Der Effekt der thermochromen Flüssigkristallpigmente kommt besonders auf schwarzem Untergrund zur Geltung, da die Pigmente nicht reflektierte Farben transmittieren. Für diese Pigmente ist es daher vorteilhaft, die Abdeckfolien 26, 28 außen und/ oder innen zumindest in Teilbereichen mit dunkler Farbe zu versehen und/oder zumindest einen in Teilbereichen dunklen Foliensteifen zu applizieren oder weitere Pigmente zusammen mit den mikroverkapselten Flüssigkristallpigmenten einzubringen, die den Effekt in vorteilhafter Weise beeinflussen.

Auf magnetische Felder reagierende Mikrokapseln/Mikrokugeln: Derartige Kapseln können durch externe magnetische Felder beeinflusst werden. Dabei ändern sich die lokalen optischen und magnetischen Eigenschaften des entsprechenden Elementes. Sie lassen sich je nach Funktionsprinzip im Wesentlichen in folgende Klassen einteilen:
i) Die Mikrokapseln enthalten plättchen- oder nadelförmige Pigmente, die im äußeren Magnetfeld ausgerichtet werden und dadurch einen Effekt erzeugen. Derartige Mikrokapseln sind beispielsweise in der Druckschrift WO 2009/074284 A2 näher beschrieben, deren Offenbarung insoweit in die vorliegende Anmeldung aufgenommen wird.
ii) Die Mikrokapseln enthalten magnetische Partikel einer gewünschten Farbe. Die Partikel migrieren im äußeren Magnetfeld entlang der Feldinhomogenität durch unmagnetische Teilchen einer anderen Farbe hindurch. Derartige Mikrokapseln sind beispielsweise in der Druckschrift EP 2 133 734 A1 näher beschrieben, deren Offenbarung insoweit in die vorliegende Anmeldung aufgenommen wird.
iii) Die Mikrokapseln enthalten magnetische Nanopartikel, die im äußeren Magnetfeld reversibel photonische Kristalle ausbilden, die sich durch eine charakteristische Farbe auszeichnen. Derartige Mikrokapseln sind beispielsweise in der Druckschrift WO 2010/142391 A1 näher beschrieben, deren Offenbarung insoweit in die vorliegende Anmeldung aufgenommen wird.
iv) Die Mikrokapseln enthalten magnetooptische Materialien, die die Polarisationsebene von linear polarisiertem Licht drehen. Derartige Mikrokapseln enthalten mit Vorteil ein magnetooptisches Material, dessen Verdet-Konstante für zumindest eine Wellenlänge im sichtbaren Spektralbereich betragsmäßig größer als 10⁵° T⁻¹ m⁻¹ ist.
v) Die Mikrokapseln enthalten piezochrome Materialien oder elektrostatisch migrierenden Materialien.
vi) Die Mikrokapseln erzeugen eine reversible Information, die durch Schwerkraft ausgelöst wird. Derartige Mikrokapseln sind beispielsweise in der Druckschrift WO 2009/100874 A2 näher beschrieben, deren Offenbarung insoweit in die vorliegende Anmeldung aufgenommen wird.
vii) Die Mikrokapseln sind durch Hitze ausdehnbare Mikrosphären, wie sie beispielsweise unter der Bezeichnung Expancel(R) von Akzo Nobel erhältlich sind. Die Hitze kann insbesondere durch Laserstrahlung, etwa mit einem CO₂- oder Nd:YAG-Laser eingebracht werden, so dass taktile Elemente innerhalb des Fensterbereichs 24 erzeugt werden können, ohne dass eine Verprägung erforderlich wäre.
viii) Die Mikrokapseln enthalten Duftstoffe. Durch den Schutz der beidseitigen Kaschierung wird der Duft über einen längeren Zeitraum abgegeben.
ix) Die Mikrokapseln enthalten ein Phase-Change-Material, wie etwa Paraffin, das seine Opazität mit der Temperatur ändert. Bei Erwärmung löst sich das verkapselte Material und die Mikrokapseln werden transparent. Beim Abkühlen kristallisiert das verkapselte Material, die Mikrokapseln werden opak.

Wie beim Ausführungsbeispiel der Fig. 2 bereits angesprochen, können im Rahmen der Erfindung mit besonderem Vorteil auch unverkapselte, nicht-sphärische Effektpigmente als Sicherheitsmerkmal eingesetzt werden. Plättchenförmige Effektpigmente sind im Sicherheitsdruck weit verbreitet und werden meist im Sieb-, Flexo- oder Stichtiefdruck appliziert. Die Pigmentkonzentration kann dabei nicht frei gewählt werden, da eine Verdruckbarkeit der Systeme, insbesondere ausreichendes Fließverhalten und Umhüllung der Pigmente gewährleistet bleiben muss. Auch die Schichtdicke ist durch das entsprechende Druckverfahren begrenzt. Diese Einschränkungen haben unmittelbaren Einfluss auf die optische Qualität (Brillanz, Sparkling) des Effektpigmentdrucks.

Im Gegensatz dazu ist es bei der vorliegenden Erfindung möglich, Füllmaterialien mit einem höheren Pigment/Bindemittel-Verhältnis einzusetzen, da die Abdeckfolien die innenliegende Füllung ausreichend vor Abrieb schützt und da bei der Hohlkammerfüllung geringere Anforderung bezüglich der Verdruckbarkeit gestellt werden bei in den oben erwähnten Druckverfahren.

Aufgrund der großen Hohlkammertiefe von typischerweise 70 µm bis 100 µm, vorzugsweise von 80 µm bis 90 µm können auch deutlich höhere Schichtdicken als bei herkömmlichen Druckverfahren realisiert werden, was zu einer deutlichen Steigerung der optischen Attraktivität führt. Ein weiterer Vorteil, der auch bei kleineren Hohlkammertiefen auftritt, besteht darin, dass sich bedingt durch die glatte, nicht saugfähige Abdeckfolie die plättchenförmigen oder nadelförmigen Pigmente wesentlich paralleler und gleichmäßiger ausrichten können, als dies auf rauem, ungestrichenem Papier der Fall wäre. Es lassen sich dadurch Effektbrillanzen erzeugen, die üblicherweise nur auf gestrichenem oder anderweitig beschichtetem Papier möglich sind. Für die Erfindung sind folgende Effektpigmente besonders gut geeignet:
i) Pigmente aus vernetzten Flüssigkristallen: Wie oben bereits geschildert, sind derartige Pigmente transluzent mit einem charakteristischen Farbkippeffekt. Aufgrund der Teildurchlässigkeit der Pigmente wird der Farbeffekt durch die höhere Schichtdicke wirkungsvoll verstärkt.
ii) Perlglanzpigmente: Diese Pigmente sind ebenfalls transluzent, so dass ihr visueller Effekt durch die höher Schichtdicke deutlich verstärkt werden kann.
iii) Holographische Pigmente und metallische Pigmente: Aufgrund ihres starken Farbspiels, das durch einen kooperativen Effekt der ausgerichteten plättchenförmigen Pigmente entsteht, profitieren diese Pigmente in besondere Weise davon, dass sie sich an den glatten Abdeckfolien gut ausrichten können. Zudem kommt die höhere Schichtdicke dem Effekt entgegen.
iv) Pigmente mit charakteristischen Formfaktoren: Es können auch Pigmente mit charakteristischen Formen, bevorzugt mit weiteren charakteristischen Zusatzfunktionen, wie Metallglanz, Farbkippeffekt oder ähnlichem eingebracht werden. Diese können auch in Mischung mit anderen Pigmenten als forensisches Merkmal eingesetzt werden.
v) Optisch variable Interferenzpigmente: Diese Pigmente, die meist einen metallischen bzw. metalloxidischen Mehrschichtaufbau besitzen, werden oft im Sicherheitsdruck eingesetzt. Auch sie profitieren von einer genaueren Ausrichtung und der hohen Schichtdicke in besonderem Maße. Im Fall von optisch variablen magnetischen Interferenzpigmenten lässt sich zudem ein spezieller Effekt erreichen, indem die Pigmente vor der Härtung des Bindemittels durch ein Magnetfeld in einer gewünschten Form ausgerichtet werden.
vi) Magnetische Partikel: Es existieren verschiedene, inhärent magnetische Pigmente, die durch verschiedene Maßnahmen eine nichtschwarze Eigenfarbe aufweisen. Der Druck einer Schicht in der für Druckschichten üblichen Schichtdicke ist dabei allerdings oft nicht ausreichend, um gewünschte magnetische Eigenschaften oder eine gewünschte Effektstärke zu erzeugen.
vii) Nanopartikelhaltige/kolloidale Formulierungen: Kollidale Metallstrukturen zeigen oft charakteristische Farben.
viii) Lasermarkierbare Substanzen: Lasermarkierbare Substanzen benötigen für einen deutlichen Kontrast generell Schichtdicken oberhalb von 10 µm und profitieren daher ebenfalls besonders von der hohen Schichtdicke innerhalb der Hohlkammern.
ix) OLED-Display: Diese Materialien sind bisher noch nicht ausreichend widerstandsfähig, um ohne Schutzhülle die geforderten chemischen Beständigkeiten zu erfüllen, dazu kommt bei herkömmlichen Druckschichten das Problem der Abrasion. Durch die beiden Abdeckfolien können auch diese Materialien ausreichend geschützt werden. Die Ankopplung an einen Stromkreis kann über gedruckte Elektroden, beispielsweise aus Indium-Zinn-Oxid erfolgen, die sich auch unter der Kaschierfolie befinden können.
x) Organische Solarzellen/Photovoltaik: Zwischen einer auf eine Abdeckfolie aufgedruckten Elektrode aus Indium-Zinn-Oxid und einer auf die andere Abdeckfolie aufgedampften Elektrode aus Aluminium wird als Füllung eine Mischung aus konjugiertem Polymer als Elektronendonator und einem Fullerenderivat als Elektronenakzeptor in die Hohlkammer eingebracht. Auf diese Weise kann Strom, beispielsweise für LEDs erzeugt werden.

Weitere vorteilhafte Effekte können im Rahmen der Erfindung in einer der folgender Weise erzeugt werden: Mit dem oben beschriebenen Düsendosiersystem wird eine erste Flüssigkeit in die Hohlkammer 22 eingespritzt, kurz danach eine zweite und gegebenenfalls weitere Flüssigkeit mit anderen Eigenschaften, beispielsweise einer anderen Farbe. Es entstehen ring- oder andersförmige Merkmale im Fensterbereich. Als Farben kommen sichtbare Farben, UV-, Fluoreszenz- oder Phosphoreszenz-Farben, Up-Conversion-Stoffe oder Mischungen davon in Betracht.

Eine weitere Möglichkeit besteht in dem Eindüsen eines Farbstoffgemischs in die Hohlkammer und dem Ausnutzen des Chromatographieeffekts der in die umgebende Papiermatrix einwandernden Stoffe. In diesem Falle ist es notwendig, als Substrat Papier zu verwenden und mit lösemittelhaltigen oder wässrigen Mischungen zu arbeiten.

Eindosierte (thermo-)plastische Harze lassen sich durch verschiedene Verfahren, beispielsweise durch Intagliodruck verprägen und, im Falle vernetzender Systeme, in der verprägten Form stabilisieren. Taktile Elemente lassen sich erzeugen, indem man tropfen-, raupen- oder andersförmige Strukturen einspritzt und aushärtet. Im Falle linsenförmiger Strukturen lassen sich auch Vergrößerungseffekte realisieren. Beim Einsatz lasersensitiver Stoffe im Fenster ist eine nachträgliche Individualisierung, etwa durch Laserbeaufschlagung möglich.

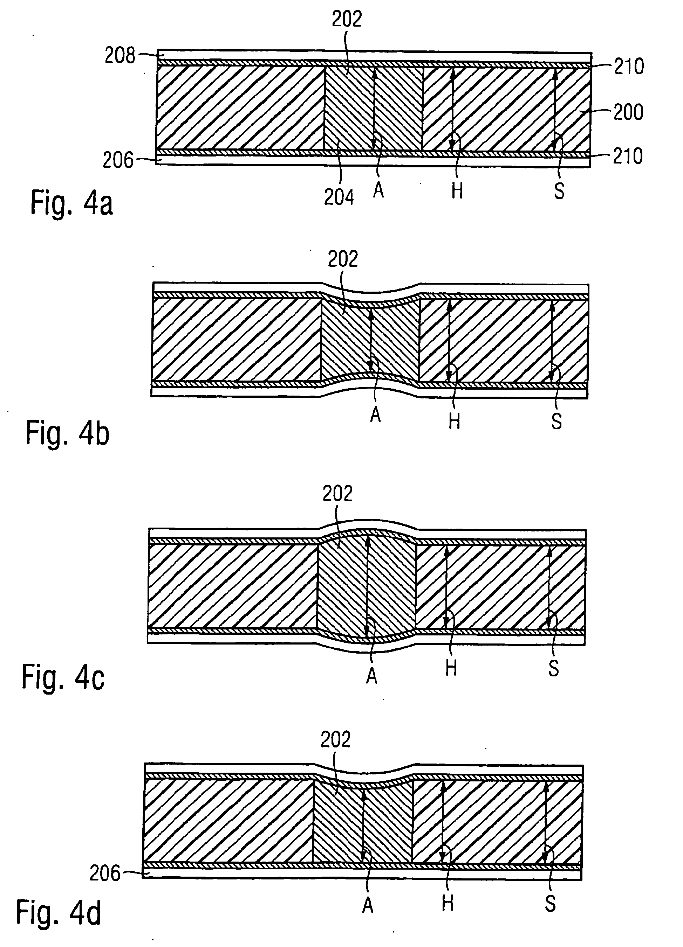

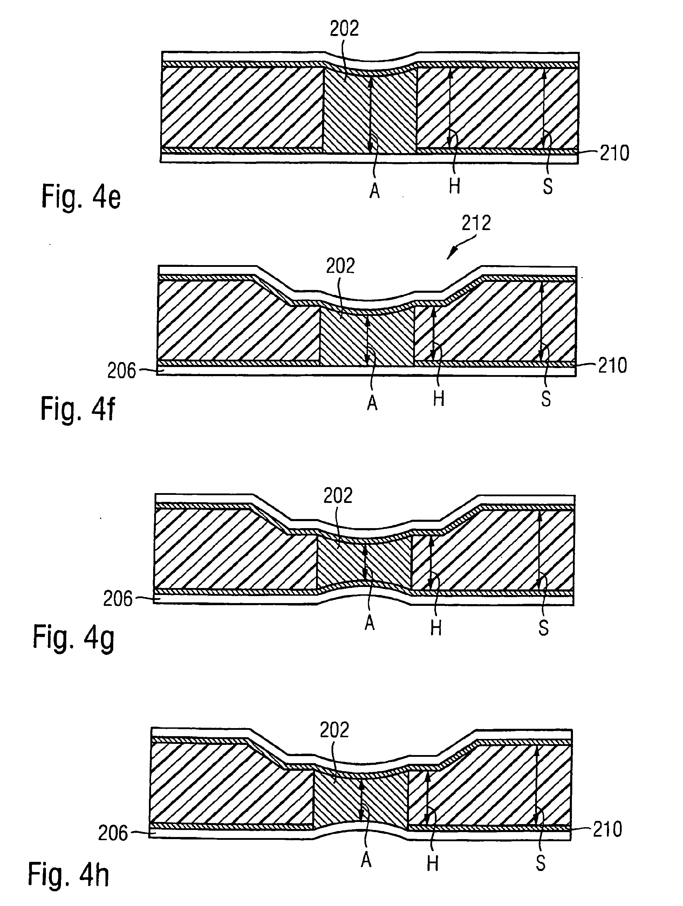

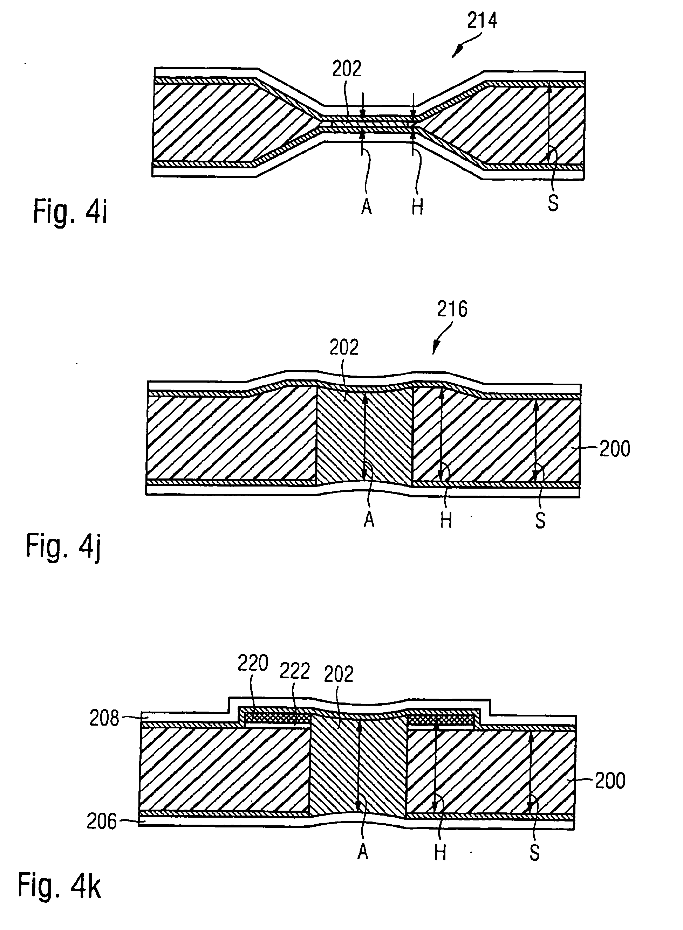

Wie bei der Beschreibung der Fig. 2 bereits angesprochen, müssen die Werte für die Substratstärke S, die Hohlkammertiefe H und die Auffüllungshöhe A im Allgemeinen nicht übereinstimmen. Fig. 3 illustriert dazu zunächst allgemein die Definition und den Zusammenhang der genannten Größen. Fig. 4 zeigt dann in (a) bis (k) verschiedene bevorzugte konkrete Ausgestaltungen mit unterschiedlichen relativen Größen von Substratstärke, Hohlkammertiefe und Auffüllungshöhe.

Mit Bezug auf den Querschnitt der Fig. 3 weist das Papiersubstrat 200 außerhalb des Bereichs der Hohlkammer 202 eine im Wesentlichen konstante Substratstärke S auf. Das Papiersubstrat 200 kann in Teilbereichen, beispielsweise einem Wasserzeichen, eine von der globalen Substratstärke S abweichende lokale Substratdicke aufweisen. Die Substratdicke am Rand der Hohlkammer 202 definiert so eine Hohlkammertiefe H, die kleiner, gleich oder größer als die globale Substratstärke S außerhalb des Hohlkammerbereichs sein kann. Die Hohlkammertiefe H wird dabei direkt am Rand der Hohlkammer 202 gemessen, der Abstandspfeil H in den Figuren 3 und 4 ist der deutlicheren Darstellung etwas vom unmittelbaren Rand abgerückt.

Nach der Füllung der Hohlkammer 202 mit Füllmaterial 204 und der Abdeckung der Hohlkammer 202 werden die gegenüberliegenden Laminatfolien 206,208 in der Praxis typischerweise keinen völlig parallelen Verlauf zeigen. Vielmehr wird durch den Abstand der Laminatfolien im Inneren der Hohlkammer 202 eine Auffüllungshöhe A definiert, die in der Regel etwas kleiner als die Hohlkammertiefe H ist. Die Auffüllungshöhe A kann unter Umständen allerdings auch gleich oder sogar größer als die Hohlkammertiefe sein, wie etwa im Zusammenhang mit Fig. 4(c) beschrieben.

Grundsätzlich kann über die Applikationsmethode für das Füllmaterial, wie etwa Düsenauftrag, Siebdruck oder Flexodruck, sowie über die Füllstoffeigenschaften, wie Viskosität, Aushärtemechanismus, Partikelgrößen, Oberflächenspannungen oder Verlauf beeinflusst werden, ob die Auffüllung in der Hohlkammer 202 eine eher konkave oder eher konvexe Form erhält.

Zur Illustration einiger besonders bevorzugter Ausgestaltungen zeigt zunächst Fig. 4(a) einen Querschnitt durch ein Sicherheitselement mit einem Substrat 200 mit einer durchgehenden Hohlkammer 202, die mit einem Füllmaterial 204 gefüllt und durch Laminatfolien 206, 208 abgedeckt ist. Das Bezugszeichen 210 bezeichnet einen Kaschierklebstoff, mit dem die Laminatfolien 206, 208 auf dem Substrat 200 befestigt sind. Im Ausführungsbeispiel der Fig. 4(a) sind die Werte für die Substratstärke, die Hohlkammertiefe, und die Auffüllungshöhe gleich, S = H = A. Gleiche Werte für Hohlkammertiefe und Auffüllungshöhe können beispielsweise bei schmalen Hohlkammern oder bei mit geeigneten Abstandhaltern versehene Hohlkammern auftreten.

Bei einem im Hohlkammerbereich nicht verjüngten oder verstärkten Substrat wird sich bei größeren Hohlkammern 202 in der Praxis allerdings typi eher eine Gestaltung wie in Fig. 4(b) gezeigt einstellen, bei der die Hohlkammertiefe gleich der Substratstärke ist, die Auffüllungshöhe aber kleiner als die Hohlkammertiefe ist, S = H > A.

Um eine Auffüllungshöhe größer als die Hohlkammertiefe zu erreichen, kann die Auffüllung beispielsweise mit hochviskosen, strukturviskosen und gegebenenfalls UV-härtbaren Systemen erfolgen, oder unter Einsatz von Füllstoffpartikeln, die größer als die Hohlkammertiefe sind. Im Ausführungsbeispiel der Fig. 4(c) ist die Hohlkammertiefe gleich der Substratstärke, die Auffüllungshöhe ist aber größer als die Hohlkammertiefe, S = H < A.

Wird die erste Laminatfolie 206 vorfixiert, so dass der Kaschierklebstoff 210 auf der Unterseite der Hohlkammer 202 bereits ausgehärtet ist, ergibt sich eine Gestaltung wie in Fig. 4(d) gezeigt, bei der wie bei Fig. 4(b) die Hohlkammertiefe gleich der Substratstärke ist, die Auffüllungshöhe aber kleiner als die Hohlkammertiefe ist, S = H > A.

Der Kaschierklebstoff 210 kann im Bereich der Hohlkammer 202 auch nur einseitig aufgebracht werden, so dass sich die in Fig. 4(e) gezeigte Gestaltung ergibt. Auch hier ist die Hohlkammertiefe gleich der Substratstärke, die Auffüllungshöhe aber kleiner als die Hohlkammertiefe, S = H > A.

Eine Verjüngung des Substrats 200 im Hohlkammerbereich kann Vorteile hinsichtlich der späteren Fensterqualität bieten. Auch kann die Gefahr von Lufteinschlüssen im Randbereich verringert werden und die Fensterränder erscheinen schärfer. Fig. 4(f) zeigt hierzu ein Sicherheitselement bei dem die Hohlkammer 202 im Bereich einer Verjüngung 212 des Substrats 200 angeordnet ist. Beispielsweise kann die globale Substratstärke S außerhalb des Hohlkammerbereichs 90 µm betragen und die Substratdicke in einer etwa 2 cm breiten, endlosen Papierverjüngung in Streifenform bis auf 30 µm abfallen. Wird die Hohlkammer durch Laserschneiden in der Mitte der Streifenverjüngung erzeugt, so beträgt die Hohlkammertiefe H = 30 µm.

Beim Ausführungsbeispiel der Fig. 4(f) ist die erste Laminatfolie 206 vorfixiert, so dass der Kaschierklebstoff 210 auf der Unterseite der Folie 206 bereits ausgehärtet ist. Die Hohlkammertiefe ist kleiner als die Substratstärke und die Auffüllungshöhe ist kleiner als die Hohlkammertiefe, S > H > A.

Da die beteiligten Materialen flexibel und kompressibel sind, sind die gezeigten Darstellungen selbstverständlich etwas idealisiert. In der Praxis wird auch eine vorfixierte Folie etwas nachgeben. Auch wird das Papiersubstrat 200 im Hohlkammerrandbereich nicht nur auf einer Seite, sondern in der Regel auf beiden Seiten, wenn auch in unterschiedlichem Ausmaß verjüngt (bzw. in anderen Gestaltungen verstärkt) sein.

Wird die Laminatfolie 206 nicht vorfixiert und der Kaschierkleber im Hohlkammerbereich nicht ausgespart, so ergibt sich eine Gestaltung, wie in Fig. 4(g) gezeigt. Dabei ist die Hohlkammertiefe kleiner als die Substratstärke und die Auffüllungshöhe ist kleiner als die Hohlkammertiefe, S > H > A.

Eine weitere Abwandlung der Gestaltungen der Figuren 4(f) und (g) ist in Fig. 4(h) gezeigt. Die Laminatfolie 206 ist nicht vorfixiert, der Kaschierkleber jedoch im Hohlkammerbereich ausgespart. Die Hohlkammertiefe ist kleiner als die Substratstärke und die Auffüllungshöhe ist kleiner als die Hohlkammertiefe, S > H > A. Es hat sich herausgestellt, dass die Ausgestaltungen der Figuren 4(f) und (h) ein besonders gutes visuelles Erscheinungsbild ergeben.

Fig. 4(i) zeigt eine Ausgestaltung mit einer sehr geringen Hohlkammertiefe, die für Füllmaterialien geeignet ist, die nur eine geringere Schichtdicke benötigen. Die Hohlkammer 202 befindet sich im Bereich eine starken Papierverjüngung 214 oder eines Büttenrands. Die Hohlkammertiefe ist viel kleiner als die Substratstärke und die Auffüllungshöhe entspricht im Wesentlichen der Hohlkammertiefe, S >> H ≈ A.

In manchen Ausgestaltungen ist anstatt einer Verjüngung eine Verstärkung des Substrats im Randbereich vorteilhaft, beispielsweise wenn voluminöse Füllstoffe in ein Substrat mit bei begrenzter Substratstärke eingebracht werden sollen. Das Ausführungsbeispiel der Fig. 4(j) zeigt ein Substrat 200 mit einer Verstärkung 216, also einem Bereich erhöhter Substratdicke. Die Auffüllungshöhe ist nur wenig kleiner als die Hohlkammertiefe, S < H >≈ A.

Mit Bezug auf Fig. 4(k) lässt sich eine Verstärkung auch durch ein zusätzliches Folienelement erzeugen, wie etwa einen Folienstreifen 220 oder ein Patch, welches vor der Hohlkammererzeugung beispielsweise mit einem Heißsiegelkleber 222 auf das Substrat 200 aufgebracht wird. Anschließend wird die Hohlkammer geschnitten oder gestanzt und der Substrat/Folienelement-Verbund im Bereich des Hohlkammer 202 mit Laminatfolien 206, 208 abgedeckt, wie oben bereits beschrieben. Die Hohlkammertiefe ist größer als die Substratstärke und die Auffüllungshöhe ist nur wenig kleiner als die Hohlkammertiefe, S < H >≈ A.

Der Vorteil einer streifenförmigen Papierverstärkung 216 oder einer Streifenapplikation 220 in der Lochspur besteht unter anderem darin, dass im Lochbereich nicht das Problem einer reduzierten Wickelhärte auftritt. Fehlstellen, wie etwa Kaschierblasen, unscharfe Ränder oder das Geistern von Fenstern können dadurch minimiert werden.

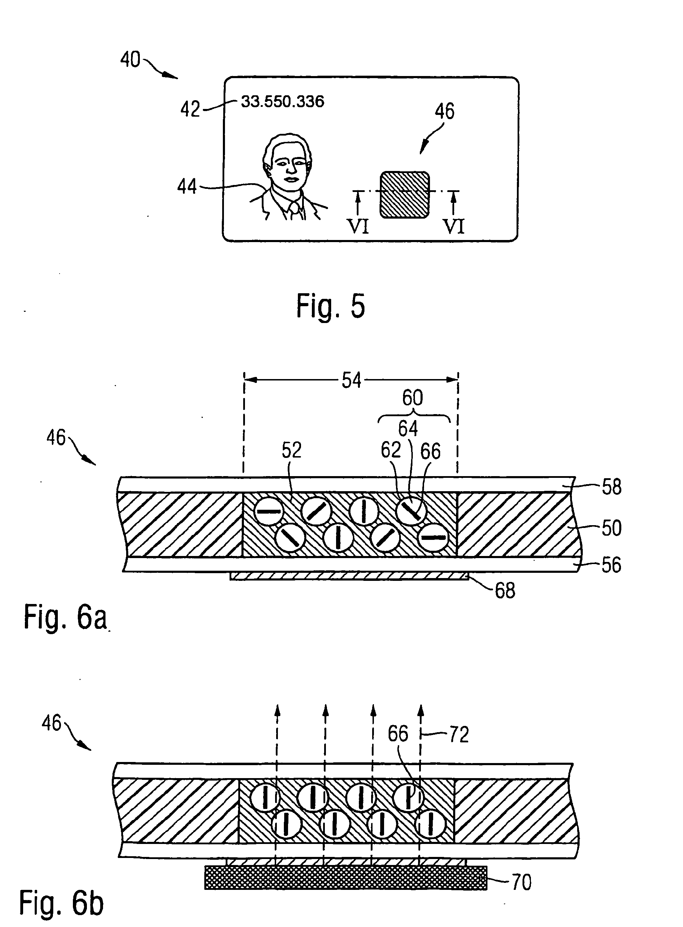

Die Erfindung kann auch bei Karten vorteilhaft eingesetzt werden, wie nunmehr anhand des Ausführungsbeispiels der Figuren 5 bis 7 illustriert wird.

Fig. 5 zeigt eine Aufsicht auf eine Identifikationskarte 40, wie etwa eine Ausweiskarte, Bankkarte, Kreditkarte oder einen Führerschein. Die Identifikationskarte 40 enthält typischerweise eine oder mehrere offene Kennzeichnungen, beispielsweise eine Seriennummer 42 und ein Portrait 44 des Karteninhabers.

Zusätzlich ist in die Identifikationskarte 40 ein erfindungsgemäßes Sicherheitselement 46 integriert, dessen Aufbau am besten in Fig. 6 zu erkennen ist, die Querschnitte der Karte 40 entlang der Linie VI-VI zeigt. Mit Bezug auf Fig. 6(a) enthält das Sicherheitselement 46 als Substrat eine Kernfolie 50 mit einer durchgehenden Hohlkammer 52, die ein Fenster 54 in der Kernfolie und dem Sicherheitselement 46 bildet. Die Kernfolie 50 ist auf ihrer Unterseite mit einer transparenten Laminatfolie 56 und auf ihrer Oberseite mit einer weiteren transparenten Laminatfolie 58 abgedeckt. Der Abstand der beiden Laminatfolien 56, 58 definiert eine Auffüllungshöhe A, die bei der Identifikationskarte 40 bei 100 µm liegt.

Die Hohlkammer 52 ist mit einem Füllmaterial gefüllt, das in einem Bindemittel eine Vielzahl von Mikrokapseln 60 enthält, die jeweils eine Kapselhülle 62, eine in die Kapselhülle eingeschlossene Trägerflüssigkeit 64 und ein plättchenförmiges, magnetisch ausrichtbares Pigment 66 aufweisen. Bei dem magnetisch ausrichtbaren Pigment 66 kann es sich beispielsweise um ein plättchenförmiges Eisenpigment handeln, das aus reduzierend behandeltem Carbonyleisenpulver hergestellt ist und das mit einem hohen Verhältnis von Plättchendurchmesser zu Plättchendicke erzeugt werden kann.
Die Pigmente 66 sind innerhalb der Kapselhülle 62 im Wesentlichen frei drehbar, so dass sie ohne äußeres Magnetfeld keine Vorzugsorientierung aufweisen, sondern im Wesentlichen zufällig und damit insgesamt isotrop ausgerichtet sind. Die gleichmäßige Verteilung der Ausrichtung der Pigmente 66 in alle Richtungen ist in Fig. 6(a) schematisch durch vier gezeigte Richtungen angedeutet.

Wird die Identifikationskarte 40 mit dem Sicherheitselement 46 über einen Magneten 70 gebracht, der im Wesentlichen senkrecht zur Ebene des Sicherheitselements 46 magnetisiert ist, wie in Fig. 6(b) gezeigt, so werden die magnetisch ausrichtbaren, plättchenförmigen Pigmente 66 aufgrund ihrer freien Drehbarkeit in der Kapselhülle 62 von dem Magneten ausgerichtet und orientieren sich mit ihrer Plättchenausdehnung entlang der Magnetfeldlinien 72. Wegen ihrer Plättchenform wirken die Pigmente 66 für den Betrachter wie die Lamellen einer Jalousie, die je nach Stellung den Durchblick durch das Fenster 54 freigeben oder ganz oder teilweise blockieren.

Das Sicherheitselement 46 umfasst weiter eine auf der unteren Laminatfolie 56 aufgebrachte Druckschicht 68, die eine verkleinerte Darstellung 44' des Portraits 44 des Karteninhabers enthält.

Ohne äußeres Magnetfeld sind die Pigmente 66 im Wesentlichen isotrop in ihren Kapselhüllen 62 angeordnet, wie in Fig. 6(a) dargestellt. Sie schränken dadurch die Durchsicht durch das Fenster 54 so stark ein, dass das Fenster für einen Betrachter vollständig opak erscheint. Die Druckschicht 68 und damit die verkleinerte Darstellung 44' des Portraits sind daher nur bei Betrachtung der Unterseite der Karte 40, nicht aber bei Betrachtung der Oberseite erkennbar.

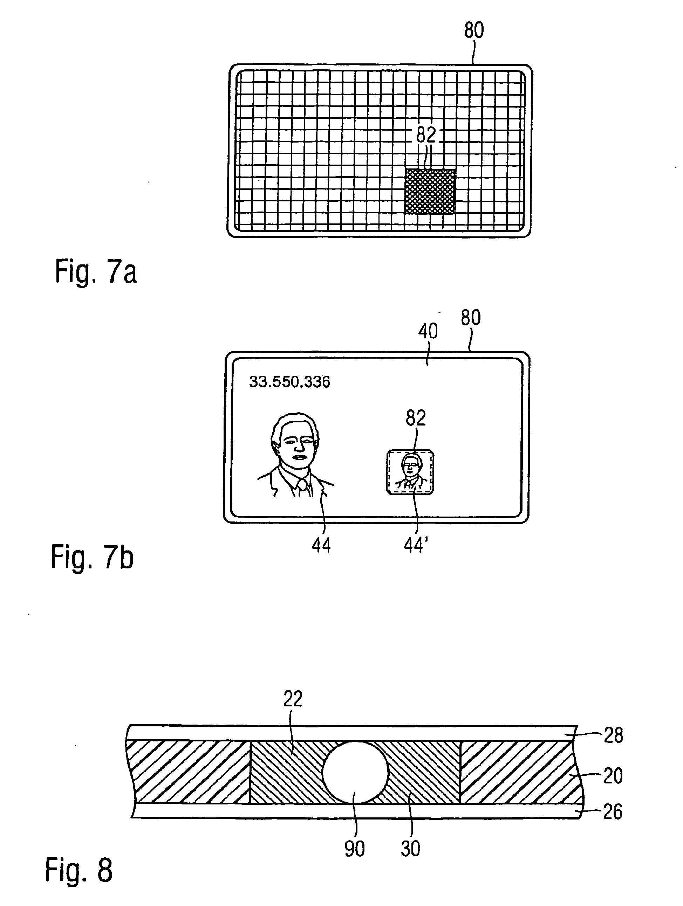

Zur Authentifizierung wird die Identifikationskarte 40 in eine zugehörige Kartenaufnahme 80 gelegt, die mit Bezug auf Fig. 7(a) einen auf die Lage, Größe und Form des Fensters 54 abgestimmten Permanentmagneten 82 enthält. Bei einer echten Identifikationskarte 40 werden die magnetisch ausrichtbaren Pigmente 66 durch die Magnetisierung des Magneten 82 senkrecht zur Ebene des Sicherheitselements 46 ausgerichtet und geben dadurch den Blick auf die Druckschicht 68 und die verkleinerte Portraitdarstellung 44' frei, wie in Fig. 7(b) dargestellt. Das Erscheinen der zweiten Portraitdarstellung 44' und die Übereinstimmung mit dem gespiegelten Originalportrait 44 kann somit zur Echtheitsprüfung der Karte 40 und als Berechtigungsnachweis des Karteninhabers eingesetzt werden.

Zur Erhöhung der visuellen Attraktivität des Fensters 54 im opaken Zustand kann das Füllmaterial neben den Mikrokapseln 60 auch magnetisch nicht ausrichtbare, optisch variable Effektpigmente enthalten oder die verkapselten Pigmente 66 können selbst mit einer optisch variablen Beschichtung versehen sein.

Um auch bei ausgedehnteren Fenstern einen konstanten Abstand der beiden Abdeckfolien und damit eine konstante Auffüllungshöhe zu gewährleisten, enthält das Sicherheitselement in einer Weiterbildung innerhalb des Fensters geeignete Abstandhalter.

Mit Bezug auf das Ausführungsbeispiel der Fig. 8 können diese Abstandhalter insbesondere durch stabile, monodisperse Kugeln 90 oder Hohlkugeln gebildet sein, die zusammen mit dem Sicherheitsmerkmal in das Füllmaterial 30 der Hohlkammer 22 eingebettet sind. Beim Kaschierprozess stellen die Kugeln 90 sicher, dass die Abdeckfolien 26, 28 einen definierten Abstand behalten und es nicht zum Ausquetschen des Bindemittels kommt. Durch die Wahl des Kugeldurchmessers kann auch eine genau definierte Auffüllungshöhe eingestellt werden, wie sie für einige Sicherheitsmerkmale unbedingt erforderlich ist.

Geeignete Kugeln haben Durchmesser von 10 µm bis 120 µm, vorzugsweise von 20 µm bis 90 µm. Eingesetzt werden können beispielsweise keramische Mikrohohlkugeln, Glasmikrohohlkugeln oder Polystyrol- und andere Polymerkügelchen, die in nahezu monodisperser Form am Markt verfügbar sind. Der Einsatz von Polymerkugeln führt dabei zu einer geringeren Belastung des Dosierventils beim Eindüsen des Füllmaterials als eine Verwendung keramischer Werkstoffe.

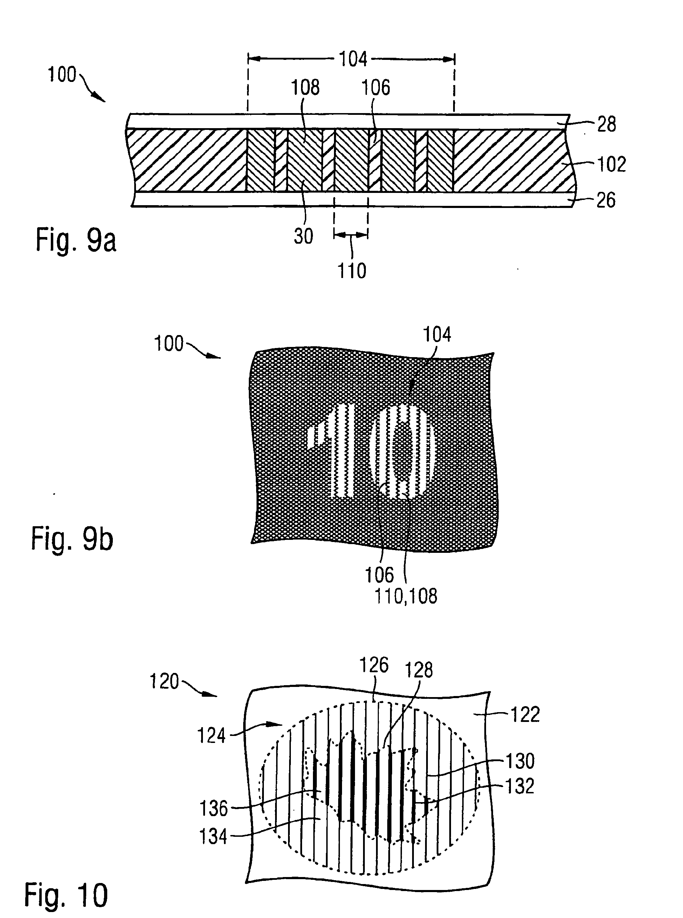

Ein weiteres Ausführungsbeispiel der Erfindung ist in Fig. 9 illustriert, die in Fig. 9(a) einen Querschnitt und in Fig. 9(b) eine Aufsicht auf ein Sicherheitselement 100 zeigt. Das Sicherheitselement 100 enthält eine Papierlage 102 mit einem Fenster 104, das in Form der Ziffernfolge "10" ausgebildet ist. Die Papierlage 102 weist im Ausführungsbeispiel eine Dicke von 90 µm auf und ist auf ihren beiden gegenüberliegenden Seiten jeweils mit einer transparenten Laminatfolie 26, 28 abgedeckt.

Das Sicherheitselement 100 enthält weiter Abstandshalter innerhalb des Fensters 104, die, anders als bei dem Ausführungsbeispiel der Fig. 8, nicht in das Füllmaterial 30 eingebettet sind, sondern durch eine Vielzahl von das Fenster 104 durchziehenden, parallelen Stegen 106 aus dem Substratmaterial selbst gebildet sind. Die Stege 106 unterteilen das Fenster in eine Vielzahl von Hohlkammern 108, die alle mit dem Füllmaterial 30 gefüllt sind, wie bereits im Zusammenhang mit Fig. 2 beschrieben.

Das Fenster 104 mit den Stegen 106 kann beispielsweise durch Laserschneiden der Papierlage 102 erzeugt werden. Dabei wird durch Laserbeaufschlagung eine Vielzahl gerader, paralleler Schnittlinien 110 erzeugt, vorzugsweise mit einer Breite zwischen 0,05 mm und 1 mm und mit einem Mitte-Mitte-Abstand zwischen 0,05 mm und 1 mm. Zwischen den Schnittlinien 110 blieben die ungeschnittenen Bereiche als Stege 106 stehen.

Die Schnittlinien müssen nicht gerade sein, sondern können auch gekrümmt verlaufen, insbesondere mit äquidistantem Abstand, um eine konstante Stegbreite zu erhalten. In anderen Ausgestaltungen können die geraden oder gekrümmten Schnittlinien allerdings auch aufeinander zu- oder voneinander weglaufen oder auch ondulieren, so dass die Stegbreite entlang der Stege ab- oder zunimmt.

In allen Gestaltungen können die Schnittlinien und damit auch die Stege in Teilbereichen des Fensters unterschiedliche Breite aufweisen, um Bereiche mit unterschiedlichem visuellem Erscheinungsbild zu erzeugen. Das Ausführungsbeispiel der Fig. 10 zeigt hierzu ein Sicherheitselement 120 mit einem Papiersubstrat 122 mit einem Fenster 124, das durch ein Linienraster aus einer Vielzahl paralleler Schnittlinien 130,132 gebildet ist. Der äußere Umriss 126 des Fensters 124 weist die Form eines Ovals auf, wie mit gestichelten Linien zur Veranschaulichung eingezeichnet.

Im Inneren des Fensters 124 liegt ein Motivbereich 128 mit Schnittlinien 132, die perfekt gepassert an die außerhalb des Motivbereichs 128 liegenden Schnittlinien 130 anschließen, die allerdings mit doppelt so großer Schnittbreite ausgeführt sind. Beispielsweise können die Schnittlinien 130 bei einem Mitte-zu-Mitte-Abstand von 0,5 mm eine Schnittbreite von 0,15 mm aufweisen, während die Schnittlinien 132 beim selben Mitte-zu-Mitte-Abstand eine Schnittbreite von 0,30 mm aufweisen. Durch die geringere Flächendeckung hebst sich das von dem Motivbereich 128 gebildete Motiv "Ahornblatt" sowohl im Auflicht als auch im Durchlicht deutlich von dem restlichen Fensterbereich ab.

Die ungeschnittenen Bereiche zwischen den Schnittlinien 130,132 bilden Stege 134,136 unterschiedlicher Breite im Papiersubstrat, die das Fenster 124 durchziehen und einen konstanten Abstand der beiden auf das Papiersubstrat 122 aufgebrachten Abdeckfolien sicherstellt. Die Schnittlinien 130,132 bilden eine Vielzahl von Hohlkammern mit unterschiedlicher Breite aber konstanter Dicke, die, wie oben beschrieben, mit einem Füllmaterial mit einem Sicherheitsmerkmal gefüllt sind.

Fig. 11 zeigt eine Aufsicht auf einen Datenträger 300, im Beispiel eine Banknote, mit den erfindungsgemäßen Sicherheitselementen 301, 302, 303 und 304. Die Banknote 300 beruht auf einem Substrat mit einem Folie/Papier/Folie-Aufbau. Um einem Aufspalten des Substrats vorzubeugen, enthält die Banknote an ihren Ecken und an einer Kante Hohlräume 301, 302, 303 und 304, bei denen das Füllmaterial als einbettende Matrix einen Klebstoff aufweist. Mit Ausnahme des Hohlraums 304 an der rechten unteren Ecke der Banknote 300 weisen die Hohlräume 301, 302 und 303 jeweils einen streifenförmigen Aufbau auf. Die streifenförmigen Hohlkammern werden dabei durch Stege des Substratmaterials (im vorliegenden Beispiel Papier) voneinander getrennt.

Fig. 12 zeigt eine Aufsicht auf einen weiteren Datenträger 305, im Beispiel eine Banknote, mit den erfindungsgemäßen Sicherheitselementen 306. Die Banknote 305 beruht auf einem Substrat mit einem Folie/Papier/Folie-Aufbau. Um einem Aufspalten des Substrats vorzubeugen, enthält die Banknote an ihren Ecken Hohlräume 306, bei denen das Füllmaterial als einbettende Matrix einen Klebstoff aufweist. Die Hohlräume 306 haben jeweils einen streifenförmigen Aufbau. Die streifenförmigen Hohlkammern werden dabei durch Stege des Substratmaterials (im vorliegenden Beispiel Papier) voneinander getrennt. In jeder Ecke der Banknote 305 sind die Hohlräume 306 parallel zur Winkelhalbierenden der jeweiligen Ecke angeordnet.

### Bezugszeichenliste

- 10: Hybrid-Banknote
- 12: Sicherheitselement
- 20: Papierlage
- 22: Hohlkammer
- 24: Durchsichtsfenster
- 26, 28: Laminatfolien
- 30: Füllmaterial
- 32: Bindemittel
- 34: Effektpigmente
- 40: Identifikationskarte
- 42: Seriennummer
- 44: Portrait
- 44': verkleinertes Portrait
- 46: Sicherheitselement
- 50: Kernfolie
- 52: Hohlkammer
- 54: Fenster
- 56,58: Laminatfolien
- 60: Mikrokapseln
- 62: Kapselhülle
- 64: Trägerflüssigkeit
- 66: Pigment
- 68: Druckschicht
- 70: Magnet
- 72: Magnetfeldlinien
- 80: Kartenaufnahme
- 82: Permanentmagnet
- 90: monodisperse Kugeln
- 100: Sicherheitselement
- 102: Papierlage
- 104: Fenster
- 106: Steg
- 108: Hohlkammer
- 110: Schnittlinien
- 120: Sicherheitselement
- 122: Papiersubstrat
- 124: Fenster
- 126: Umriss
- 128: Motivbereich
- 130,132: Schnittlinien
- 134,136: Stege
- 200: Papiersubstrat
- 202: Hohlkammer
- 204: Füllmaterial
- 206,208: Laminatfolien
- 210: Kaschierklebstoff
- 212: Verjüngung
- 214: starke Papierverjüngung
- 216: Verstärkung
- 220: Folienstreifen
- 222: Heißsiegelkleber

## Patentansprüche

1. Sicherheitselement (12) zur Absicherung von Wertgegenständen (10) mit einem Substrat (20) mit einem Fenster (24), das zumindest eine durch das Substrat durchgehende Hohlkammer (22) enthält, wobei
- die zumindest eine Hohlkammer mit einem Füllmaterial (30) mit einem Sicherheitsmerkmal (34) gefüllt ist,
- die zumindest eine Hohlkammer auf beiden Seiten des Substrats jeweils mit einer zumindest teilweise lichtdurchlässigen Abdeckfolie (26, 28) abgedeckt ist, und dass
- die zumindest eine Hohlkammer eine durch die Substratdicke am Rand der Hohlkammer definierte Hohlkammertiefe (H) aufweist, die zwischen 0,5 µm und 140 µm liegt, **dadurch gekennzeichnet, dass** das Substrat ein Papiersubstrat ist.

2. Sicherheitselement nach Anspruch 1, **dadurch gekennzeichnet, dass** die Hohlkammertiefe zwischen 20 µm und 100 µm, vorzugsweise entweder zwischen 80 µm und 90 µm, insbesondere zwischen 85 µm und 90 µm, oder zwischen 20 µm und 40 µm liegt.

3. Sicherheitselement nach Anspruch 1 oder 2, **dadurch gekennzeichnet, dass** das Füllmaterial als Sicherheitsmerkmal mikroverkapselte Systeme oder nicht-sphärische Effektpigmente aufweist.

4. Sicherheitselement nach Anspruch 3, **dadurch gekennzeichnet, dass** das mikroverkapselte System eine Vielzahl von Mikrokapseln umfasst, die eine Kapselhülle und einen durch externe Magnetfelder beeinflussbaren, insbesondere durch externe Magnetfelder ausrichtbaren Kapselinhalt aufweisen.

5. Sicherheitselement nach einem der Ansprüche 1 bis 4, **dadurch gekennzeichnet, dass** das Füllmaterial einen Klebstoff aufweist.

6. Sicherheitselement nach wenigstens einem der Ansprüche 1 bis 4, **dadurch gekennzeichnet, dass** das Füllmaterial eine klebstofffreie Matrix für das Sicherheitsmerkmal enthält, insbesondere ein thermoplastisches Harz, ein UV-vernetzendes Harz, ein Elektronenstrahl-vernetzendes Harz oder ein chemisch filmbildendes Harz.

7. Sicherheitselement nach wenigstens einem der Ansprüche 1 bis 6, **dadurch gekennzeichnet, dass** das Füllmaterial ausschließlich innerhalb der zumindest einen Hohlkammer vorliegt.

8. Sicherheitselement nach wenigstens einem der Ansprüche 1 bis 7, **dadurch gekennzeichnet, dass** das Sicherheitselement innerhalb des Fensters Abstandhalter aufweist, die eine konstante Hohlkammertiefe sicherstellen.

9. Sicherheitselement nach Anspruch 8, **dadurch gekennzeichnet, dass** die Abstandhalter in das Füllmaterial eingebettet sind, insbesondere in Form von monodispersen Vollkugeln oder Hohlkugeln.

10. Sicherheitselement nach Anspruch 8, **dadurch gekennzeichnet, dass** die Abstandhalter durch eine Vielzahl von das Fenster durchziehenden Stegen des Substratmaterials gebildet sind.

11. Sicherheitselement nach wenigstens einem der Ansprüche 1 bis 10, **dadurch gekennzeichnet, dass** sich die Auffüllungshöhe um weniger als 10%, vorzugsweise um weniger als 5% von der Hohlkammertiefe unterscheidet.

12. Sicherheitselement nach wenigstens einem der Ansprüche 1 bis 10, **dadurch gekennzeichnet, dass** das Fenster ein Linienraster aus einer Vielzahl gerader oder gekrümmter Schnittlinien umfasst, bei dem die Schnittlinien die Hohlkammern bilden, die mit dem Füllmaterial mit dem Sicherheitsmerkmal gefüllt sind.

13. Verfahren zum Herstellen eines Sicherheitselements zur Absicherung von Wertgegenständen, bei dem
- in einem Papiersubstrat ein Fenster erzeugt wird, das zumindest eine durch das Substrat durchgehende Hohlkammer enthält,
- die zumindest eine Hohlkammer mit einem Füllmaterial mit einem Sicherheitsmerkmal gefüllt wird,
- die zumindest eine Hohlkammer auf beiden Seiten des Substrats jeweils mit einer zumindest teilweise lichtdurchlässigen Abdeckfolie abgedeckt wird, wobei
- die zumindest eine Hohlkammer eine die Substratdicke am Rand der Hohlkammer definierte Hohlkammertiefe aufweist, die zwischen 0,5 µm und 140 µm liegt.

14. Sicherheitsanordnung zur Absicherung von Sicherheitspapieren, Wertdokumenten, Datenträgern und dergleichen mit einem Sicherheitselement nach einem der Ansprüche 1 bis 12, bei dem das Sicherheitsmerkmal durch Magnetfelder beeinflussbar, insbesondere ausrichtbar ist, und mit einem Verifikationselement mit einem Magnetbereich.

15. Sicherheitsanordnung nach Anspruch 14, **dadurch gekennzeichnet, dass** in dem Magnetbereich magnetisches Material in Form von Mustern, Linien, Zeichen oder einer Codierung vorliegt und/ oder dass der Magnetbereich im Wesentlichen senkrecht zur Ebene des Verifikationselements magnetisiert ist.

16. Datenträger, in den ein Sicherheitselement nach einem der Ansprüche 1 bis 12 oder eine Sicherheitsanordnung nach einem der Ansprüche 14 oder 15 integriert ist, oder der mit einem solchen Sicherheitselement oder einer solchen Sicherheitsanordnung ausgestattet ist.

17. Datenträger nach Anspruch 16, in den ein Sicherheitselement nach Anspruch 5 integriert ist und der auf einem Folie/Papier/Folie-Aufbau basiert.

## Claims

1. A security element (12) for securing value objects (10) with a substrate (20) with a window (24) containing at least one hollow chamber (22) passing through the substrate, wherein
- the at least one hollow chamber is filled with a filling material (30) with a security feature (34),
- the at least one hollow chamber is covered on both sides of the substrate respectively with one at least partially light-transmissive cover foil (26, 28), and that
- the at least one hollow chamber has a hollow chamber depth (H) defined by the substrate thickness at the edge of the hollow chamber, lying between 0.5 µm and 140 µm,
**characterized in that** the substrate is a paper substrate.

2. The security element according to claim 1, **characterized in that** the hollow chamber depth lies between 20 µm and 100 µm, preferably either between 80 µm and 90 µm, in particular between 85 µm and 90 µm, or between 20 µm and 40 µm.

3. The security element according to claim 1 or 2, **characterized in that** the filling material has micro-encapsulated systems or non-spherical effect pigments as security feature.

4. The security element according to claim 3, **characterized in that** the micro-encapsulated system comprises a multiplicity of micro capsules having a capsule shell and a capsule content that can be influenced by external magnetic fields, in particular oriented by external magnetic fields.

5. The security element according to any of the claims 1 to 4, **characterized in that** the filling material has an adhesive.

6. The security element according to at least one of the claims 1 to 4, **characterized in that** the filling material contains an adhesive-free matrix for the security feature, in particular a thermoplastic resin, a UV-crosslinking resin, an electron-beam-crosslinking resin or a chemically film-forming resin.

7. The security element according to at least one of the claims 1 to 6, **characterized in that** the filling material is present exclusively within the at least one hollow chamber.

8. The security element according to at least one of the claims 1 to 7, **characterized in that** the security element has spacers within the window which ensure a constant hollow-chamber depth.

9. The security element according to claim 8, **characterized in that** the spacers are embedded in the filling material, in particular in the form of monodisperse full spheres or hollow spheres.

10. The security element according to claim 8, **characterized in that** the spacers are formed by a multiplicity of bars of the substrate material running through the window.

11. The security element according to at least one of the claims 1 to 10, **characterized in that** the filling height differs from the hollow-chamber depth by less than 10%, preferably less than 5%.

12. The security element according to at least one of the claims 1 to 10, **characterized in that** the window comprises a line screen of a multiplicity of straight or curved sectional lines, in which the sectional lines form the hollow chambers filled with the filling material with the security feature.

13. A method for manufacturing a security element for securing value objects, wherein
- in a paper substrate a window is produced which contains at least one hollow chamber passing through the substrate,
- the at least one hollow chamber is filled with a filling material with a security feature,
- the at least one hollow chamber is covered on both sides of the substrate respectively with one at least partially light-transmissive cover foil, wherein
- the at least one hollow chamber has a hollow chamber depth defined by the substrate thickness at the edge of the hollow chamber, lying between 0.5 µm and 140 µm.

14. A security arrangement for securing security papers, value documents, data carriers and the like with a security element according to any of the claims 1 to 12, wherein the security feature can be influenced, in particular oriented, by magnetic fields, and with a verification element with a magnetic region.

15. The security arrangement according to claim 14, **characterized in that** in the magnetic region magnetic material in the form of patterns, lines, characters or a coding is present and/or that the magnetic region is magnetized substantially perpendicularly to the plane of the verification element.

16. A data carrier in which there is integrated a security element according to any of the claims 1 to 12 or a security arrangement according to any of the claims 14 or 15, or which is equipped with such a security element or such a security arrangement.

17. The data carrier according to claim 16, in which a security element according to claim 5 is integrated and which is based on a foil/ paper/ foil structure.

## Revendications

1. Élément de sécurité (12) destiné à la sécurisation d'objets de valeur (10), comprenant un substrat (20) pourvu d'une fenêtre (24) qui comporte au moins une chambre creuse (22) traversant le substrat, cependant que
- la au moins une chambre creuse est remplie d'un matériau de remplissage (30) doté d'une caractéristique de sécurité (34),
- la au moins une chambre creuse est recouverte des deux côtés du substrat respectivement par un film de couverture (26, 28) au moins partiellement translucide, et que
- la au moins une chambre creuse présente une profondeur de chambre creuse (H) qui est définie par l'épaisseur du substrat en bordure de la chambre creuse et se situe entre 0,5 µm et 140 µm, **caractérisé en ce que** le substrat est un substrat en papier.

2. Élément de sécurité selon la revendication 1, **caractérisé en ce que** la profondeur de chambre creuse se situe entre 20 µm et 100 µm, de préférence soit entre 80 µm et 90 µm, particulièrement de préférence entre 85 µm et 90 µm, soit entre 20 µm et 40 µm.

3. Élément de sécurité selon la revendication 1 ou 2, **caractérisé en ce que** le matériau de remplissage comporte, en tant que caractéristique de sécurité, des systèmes micro-encapsulés ou des pigments à effets non sphériques.

4. Élément de sécurité selon la revendication 3, **caractérisé en ce que** le système micro-encapsulé comprend une pluralité de microcapsules qui comportent une enveloppe de capsule et un contenu de capsule influençable par des champs magnétiques extérieurs, en particulier orientable par des champs magnétiques extérieurs.

5. Élément de sécurité selon une des revendications de 1 à 4, **caractérisé en ce que** le matériau de remplissage est une colle.

6. Élément de sécurité selon au moins une des revendications de 1 à 4, **caractérisé en ce que** le matériau de remplissage comporte une matrice sans colle pour la caractéristique de sécurité, en particulier une résine thermoplastique, une résine à réticulation UV, une résine à réticulation par faisceau d'électrons ou une résine formant un film par réaction chimique.

7. Élément de sécurité selon au moins une des revendications de 1 à 6, **caractérisé en ce que** le matériau de remplissage se trouve exclusivement à l'intérieur de la moins une chambre creuse.

8. Élément de sécurité selon au moins une des revendications de 1 à 7, **caractérisé en ce que** l'élément de sécurité comporte à l'intérieur de la fenêtre des espaceurs qui assurent une profondeur constante de la chambre creuse.

9. Élément de sécurité selon la revendication 8, **caractérisé en ce que** les espaceurs sont noyés dans le matériau de remplissage, en particulier sous forme de billes pleines ou creuses monodisperses.

10. Élément de sécurité selon la revendication 8, **caractérisé en ce que** les espaceurs sont constitués par une pluralité d'âmes du matériau de substrat parcourant la fenêtre.

11. Élément de sécurité selon au moins une des revendications de 1 à 10, **caractérisé en ce que** la hauteur de remplissage se différencie de moins de 10%, de préférence de moins de 5%, de la profondeur de la chambre creuse.

12. Élément de sécurité selon au moins une des revendications de 1 à 10, **caractérisé en ce que** la fenêtre comprend une trame lignée composée d'une pluralité de lignes de coupe droites ou incurvées et dans laquelle les lignes de coupe constituent les chambres creuses qui sont remplies du matériau de remplissage doté de la caractéristique de sécurité.

13. Procédé de fabrication d'un élément de sécurité destiné à la sécurisation d'objets de valeur, dans lequel
- dans un substrat en papier, une fenêtre est générée, laquelle comporte au moins une chambre creuse traversant le substrat,
- la au moins une chambre creuse est remplie d'un matériau de remplissage doté d'une caractéristique de sécurité,
- la au moins une chambre creuse est recouverte des deux côtés du substrat respectivement par un film de couverture au moins partiellement translucide, cependant que
- la au moins une chambre creuse présente une profondeur de chambre creuse qui est définie par l'épaisseur du substrat en bordure de la chambre creuse et se situe entre 0,5 µm et 140 µm.

14. Agencement de sécurité destiné à la sécurisation de papiers de sécurité, documents de valeur, supports de données et objets similaires, pourvu d'un élément de sécurité selon une des revendications de 1 à 12 dans lequel la caractéristique de sécurité est influençable par des champs magnétiques, en particulier orientable, et d'un élément de vérification ayant une zone magnétique.

15. Agencement de sécurité selon la revendication 14, **caractérisé en ce que**, dans la zone magnétique, du matériau magnétique se trouve sous forme de motifs, de lignes, de caractères ou d'une codification et/ou **en ce que** la zone magnétique est magnétisée essentiellement perpendiculairement au plan de l'élément de vérification.

16. Support de données dans lequel un élément de sécurité selon une des revendications de 1 à 12 ou un agencement de sécurité selon une des revendications 14 ou 15 est intégré, ou qui est équipé d'un tel élément de sécurité ou d'un tel agencement de sécurité.

17. Support de données selon la revendication 16, dans lequel un élément de sécurité selon la revendication 5 est intégré et qui est basé sur une structure de film/papier/film.
